# DEMANDE DE BREVET EUROPEEN

(11) **EP 1 106 861 A1**
(43) Date de publication de la demande: **13.06.2001**
(21) Numéro de dépôt: 00403343.7
(22) Date de dépôt: 30.11.2000
(51) Int. Cl.: F16F 7/12

(54) **Poutre creuse d'absorption d'energie de choc**

(30) Priorité: 02.12.1999 FR 9915188
(71) Demandeur: USINOR, 92800 Puteaux (FR)
(72) Inventeur: Cornette, Dominique, 57100 Thionville (FR); Cotinaut, Laurent, 57525 Talange (FR)
(74) Mandataire: Ventavoli, Roger

(57) **Abrégé**

Poutre dont au moins une des parois est en tôle composite comprenant une âme d'épaisseur homogène en matériau polymère et, sur chaque face de ladite âme, un parement en tôle métallique collé sur ladite âme et dont l'épaisseur est inférieure à celle de ladite âme.

Une telle poutre est très performante en termes d'énergie spécifique dissipée par kilogramme de matériau.

Procédé de fabrication dans lequel la tôle composite est préparée avant mise en forme des parois.

On obtient ainsi de manière très économique une poutre performante.

## Description

L'invention concerne une poutre creuse d'absorption d'énergie de choc ayant un axe le long duquel, pour absorber ledit choc, sa longueur est réduite d'une manière approximativement uniforme en réponse à une force d'impact de choc dont la projection sur cet axe représente la composante principale, ladite absorption d'énergie étant essentiellement irréversible et procédant essentiellement par déformation plastique des parois de ladite poutre.

Ainsi, la poutre se déforme et se rétrécit pour absorber le choc, par exemple par formation de lobes successifs se pliant en accordéon les uns sur les autres, ou par retournement des parois de la poutre comme décrit dans les demandes de brevet EP 0 763 448 (HOOGOVENS) et FR 2 698 674 (GKN - LOHR).

Dans le domaine des véhicules de transport, certaines pièces de structure, comme des supports de pare-choc ou des longerons, sont adaptées pour se déformer en cas de choc accidentel et pour absorber l'énergie cinétique du véhicule soumis au choc ; comme cette énergie cinétique est proportionnelle à la masse du véhicule soumis au choc, on cherche donc à alléger les véhicules de manière à diminuer l'énergie à absorber en cas de choc ; on recherche donc en particulier des absorbeurs d'énergie à la fois efficaces et légers.

Une poutre adaptée pour amortir les chocs peut être de section ouverte ou fermée.

Une section ouverte peut comprendre, par exemple comme dans le document US 4 684 151 (G.M.), une base, deux ailes adjacentes formant un U avec la base et un rebord parallèle à la base à l'extrémité de chaque aile : la poutre comprend alors cinq parois : une base, deux ailes et deux rebord.

Une poutre de section fermée est appelée tube ; elle peut être réalisée en assemblant plusieurs poutres de section ouvertes, par exemple en assemblant par leurs rebords deux poutres en U précédemment décrites ; elle peut être réalisée d'une autre façon à partir d'un flan cintré dont les bords cintrés opposés sont soudés.

Le comportement au choc de différents types de poutres tubulaires a été présenté dans le document intitulé « Energy Absorption in stainless steel structural members », écrit par H.L. GROTH et al. de la Société AVESTA AB, présenté en octobre 1990 au « Nordic Symposium on Mechanical Properties of Stainless Steels » qui a eu lieu à SIGTUNA en Suède.

Une poutre creuse est donc formée d'une ou plusieurs parois : plusieurs parois globalement planes formant entre elles un angle de fermeture pour les poutres à section polygonale, généralement une seule paroi cintrée pour les poutres à section circulaire.

D'une manière classique, pour évaluer le comportement aux chocs, on applique une charge de compression dans l'axe de la poutre et on mesure la déformation sous charge ; comme illustré à la figure 3 de ce document, la déformation de la poutre commence dès qu'on atteint une charge maximale de déclenchement P_{max.} , puis, les parois de la poutre se déforment de manière continue et le niveau de la charge oscille autour d'une valeur moyenne Pₘ avec une amplitude Pₐ jusqu'à obtenir le rétrécissement maximum de la poutre (longueur minimum) ; l'aire sous la courbe reliant la charge à la déformation représente d'énergie absorbée.

Quand les parois de la poutre d'absorption de choc sont en tôle métallique, notamment d'acier; l'absorption d'énergie procède alors essentiellement par déformation plastique du matériau des parois, les parois de la poutre se plissant et se déformant de manière continue ; quelques ruptures locales peuvent apparaître au cours de la déformation.

Pour alléger de telles poutres métalliques d'absorption, on peut utiliser des nuances d'acier présentant de meilleures propriétés mécaniques intrinsèques et des tôles de plus faible épaisseur ; cette solution a cependant ses limites dans la mesure où elle entraîne une diminution importante des moments d'inertie de flexion de la tôle et des risques consécutifs de flambement de la poutre.

Une autre solution d'allègement consiste à réaliser les parois de la poutre en matériau composite ; l'absorption d'énergie peut procéder alors essentiellement par destruction ou déstructuration dudit matériau ; on aboutit alors à des organes d'absorption d'énergie plus légers, ce qui est particulièrement avantageux dans les applications automobiles; l'énergie absorbée par unité de masse peut être supérieure à 30 kJ/kg.

Le document FR 2 698 034 (RENAULT) décrit une poutre en matériau composite stratifié qui possède une caractéristique d'absorption d'énergie au delà d'un seuil important qui lui permet de résister aux chocs à faible vitesse ; l'élément absorbeur est par exemple constitué par un tube en fibres de verre et résine de polyester; dans ce cas, l'absorption d'énergie s'opère par fragmentation du matériau au cours d'une destruction progressive du matériau composite.

Le document EP 055 364 (MESSERSCHMITT) décrit un tube absorbeur dont la surface est réalisée par la technique d'enroulement de filaments à partir d'au moins un matériau composite fibreux, et qui absorbe de façon irréversible l'énergie par décollement interlamellaire.

Le document EP 922 876 (NIPPON PETROCHEMICALS) décrit (revendication 7) un tube absorbeur en matériau composite stratifié comprenant plusieurs couches dont les interfaces ont des orientations différentes les unes des autres pour former un profil d'effondrement dont les fractures de fibres assurent une bonne stabilité (« a fracture mode stabilising guide » en langue anglaise).

La fabrication d'une poutre comprend bien évidemment une étape de mise en forme du matériau, qui pose problème pour de tels matériaux composites, puisque le matériau, dans son état final, n'est précisément pas déformable mais au contraire « cassable» ; il convient donc de mettre en forme le matériau dans un état « précurseur», par exemple en enroulant et en empilant sur une préforme des nappes élémentaires à matrice polymère thermodure non réticulée ; ainsi les poutres de ce type sont coûteuses à fabriquer.

EP 874 176 (ABB - DAIMLER BENZ) propose une solution d'absorption d'énergie procédant à la fois par déformation plastique d'un matériau métallique et par destruction ou déstructuration d'un matériau composite ; ce document décrit un élément absorbeur tubulaire formé par deux tubes de matériaux différents emmanchés l'un dans l'autre : l'un des tubes est métallique et absorbe l'énergie en se déformant par retournement, l'autre tube est en matériau composite, par exemple stratifié, et absorbe l'énergie par destruction progressive ; une poutre « mixte » de ce type est également très onéreuse.

L'inconvénient des absorbeurs de choc en matériau composite qui procèdent par destruction ou déstructuration de ce matériau est donc leur coût élevé de fabrication.

L'invention a pour but de fournir un absorbeur de choc à la fois performant, léger et économique.

A cet effet, l'invention a pour objet une poutre creuse d'absorption d'énergie de choc ayant un axe le long duquel, pour absorber ledit choc, sa longueur est réduite d'une manière approximativement uniforme en réponse à une force d'impact de choc dont la projection sur cet axe représente la composante principale, ladite absorption d'énergie étant essentiellement irréversible et procédant essentiellement par déformation plastique des parois de ladite poutre, caractérisée en ce qu'au moins une desdites parois est en tôle composite comprenant une âme d'épaisseur homogène en matériau polymère et, sur chaque face de ladite âme, un parement en tôle métallique collé sur ladite âme et dont l'épaisseur est inférieure à celle de ladite âme.

Par matériau polymère, on entend un matériau à base de polymère choisi par exemple dans le groupe comprenant les polyoléfines, les polyesters, les polyuréthanes, les polyamides ; ce matériau polymère peut, d'une manière classique, comprendre des additifs fonctionnels et des charges minérales et/ou organiques ; ces charges peuvent se présenter sous forme de fibres minérales, organiques, et/ou naturelles.

La composition du matériau polymère peut être adaptée pour être déformable soit d'une manière plastique, soit d'une manière destructive ou déstructurante dans les conditions de déformation du choc.

De préférence, toutes lesdites parois de ladite poutre sont en tôle composite.

De préférence, lesdites tôles métalliques des parements sont en acier.

Par tôles d'acier, on entend des tôles classiques d'acier au carbone ou d'acier inoxydable, d'acier nu ou revêtu de couches métallique et/ou organique dont l'épaisseur globale est largement inférieure à celle de la tôle.

Grâce à la tôle composite, on aboutit ainsi à une amélioration très importante d'énergie spécifique dissipée par kilogramme de matériau constituant la poutre.

Après le pic (P_{max.}) de déclenchement de déformation, on obtient donc des valeurs élevées d'énergie d'absorption même pour des géométries de poutres creuses très simples à réaliser, de section ouverte ou fermée ; l'origine de ces performances provient notamment de l'inertie de flexion élevée de la tôle composite résultant d'une âme centrale épaisse moins dense que les parements; cet effet est obtenu sans augmentation globale de poids, au contraire.

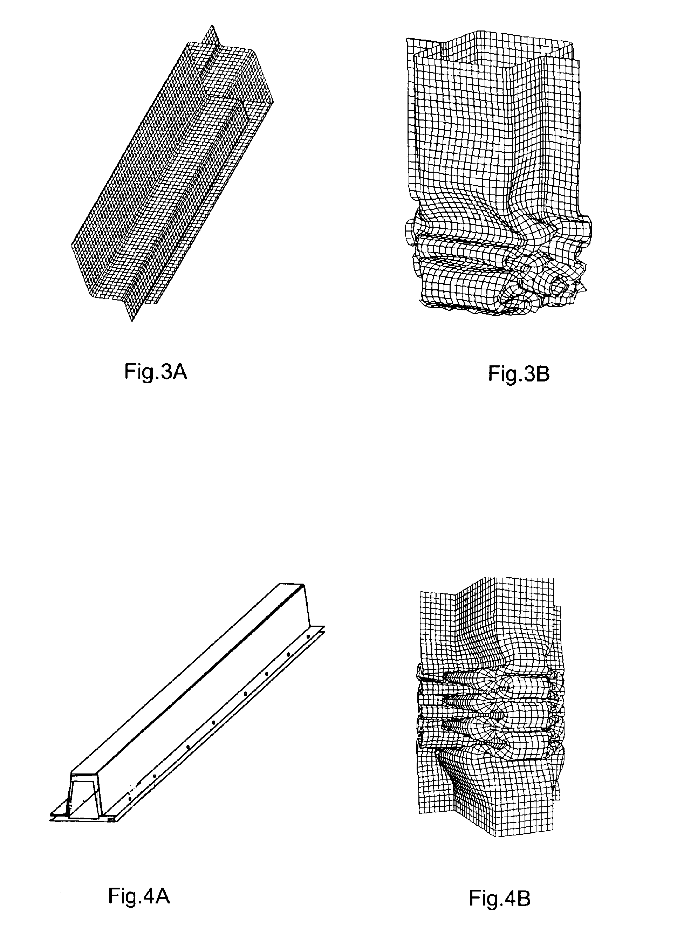

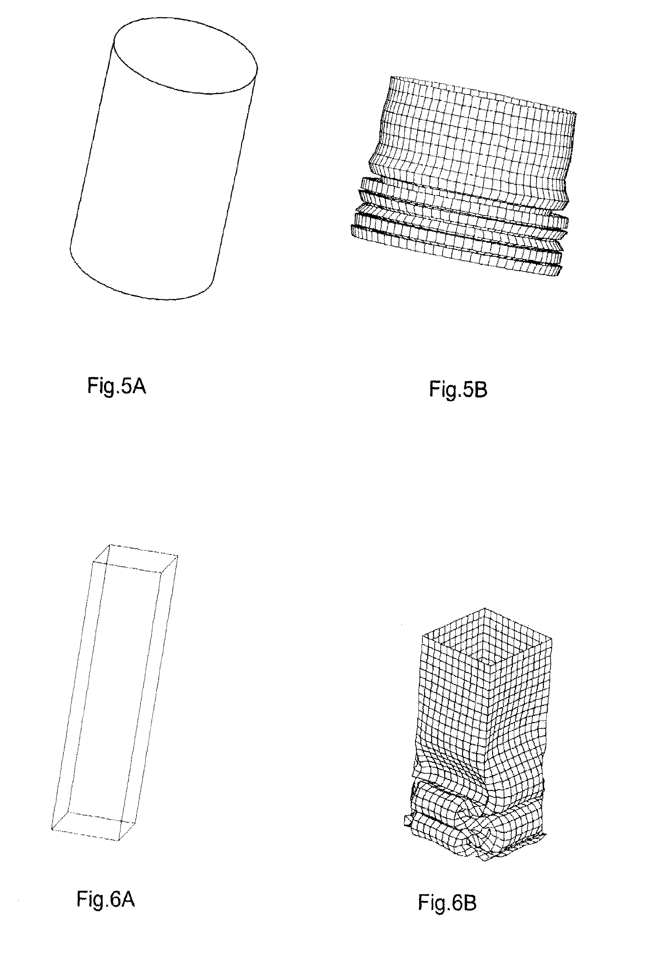

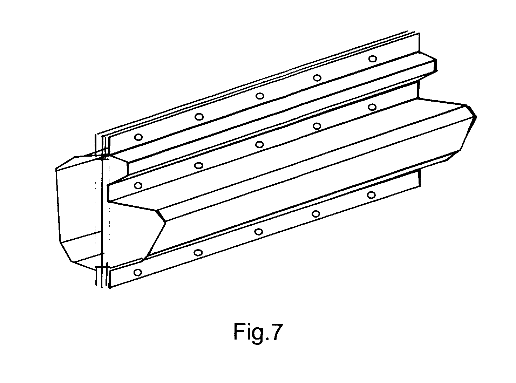

La poutre selon l'invention est de section quelconque, ouverte ou fermée ; les figures 3A, 4A, 5A, 6A et 7 décrivent des formes possibles de poutres creuses et fermées selon l'invention.

Notamment dans les cas de section fermée, la cavité interne de la poutre peut renfermer un matériau amortissant, comme de la mousse métallique ou organique.

D'une manière classique, pour limiter la valeur de P_{max.} , la poutre peut être dotée de moyens aptes à faciliter le déclenchement de la déformation ; les parois de la poutre peuvent être à cet effet dotées de nervures ou de trous adaptés, comme dans les document suivants :
- DD-272-442-A pour une poutre à section fermée : les parois sont dotées de trous,
- JP-55-136660 A (FUJI), JP2175452 A (ISUZU), US 4 702 515 (TOYOTA) pour une poutre à section fermée : les parois sont dotées de nervures,
- US 4 684 151 (G.M.) pour une poutre à section ouverte : les parois sont dotées de nervures.

L'invention a également pour objet un procédé de fabrication d'une poutre creuse d'absorption d'énergie de choc ayant un axe le long duquel, pour absorber ledit choc, sa longueur est réduite d'une manière approximativement uniforme en réponse à une force d'impact de choc dont la projection sur cet axe représente la composante principale, ladite absorption d'énergie étant essentiellement irréversible et procédant essentiellement par déformation plastique des parois de ladite poutre, caractérisé en ce qu'il comprend les étapes consistant à :
- fabriquer une tôle composite comprenant une âme d'épaisseur homogène en matériau polymère et, sur chaque face de ladite âme, un parement en tôle métallique collé sur ladite âme et dont l'épaisseur est inférieure à celle de ladite âme,
- puis, conférer à ladite tôle composite la forme d'au moins une paroi et, le cas échéant avec d'autres parois en tôle métallique, assembler lesdites parois pour former ladite poutre creuse.

La composition du matériau polymère est adaptée pour être déformable d'une manière plastique dans les conditions de déformation de l'étape de mise en forme.

La composition du matériau polymère et la nature de la couche d'interface entre l'âme et les parements sont adaptées d'une manière connue en elle-même pour que la tôle composite puisse se déformer sans destruction dudit matériau ni délamination de ladite tôle composite lors de l'étape de mise en forme de cette tôle pour la fabrication de ladite poutre.

De préférence, ledit matériau polymère est thermoplastique.

Pour conférer à ladite tôle composite la forme d'au moins une paroi, on peut utiliser des moyens conventionnels de mise en forme de tôles métalliques, notamment l'emboutissage, le pliage et l'hydroformage ; la poutre peut être réalisée à partir de plusieurs parois assemblées par des moyens conventionnels, par exemple par rivetage ou collage, notamment dans les cas de poutre à section fermée.

Ainsi, parce que ces moyens conventionnels sont applicables aux tôles composites, le procédé de fabrication de poutre d'absorption de choc selon l'invention est particulièrement économique.

L'invention sera mieux comprise à la lecture de l'exemple ci-après, donné à titre non limitatif, et en référence aux figures annexées sur lesquelles :

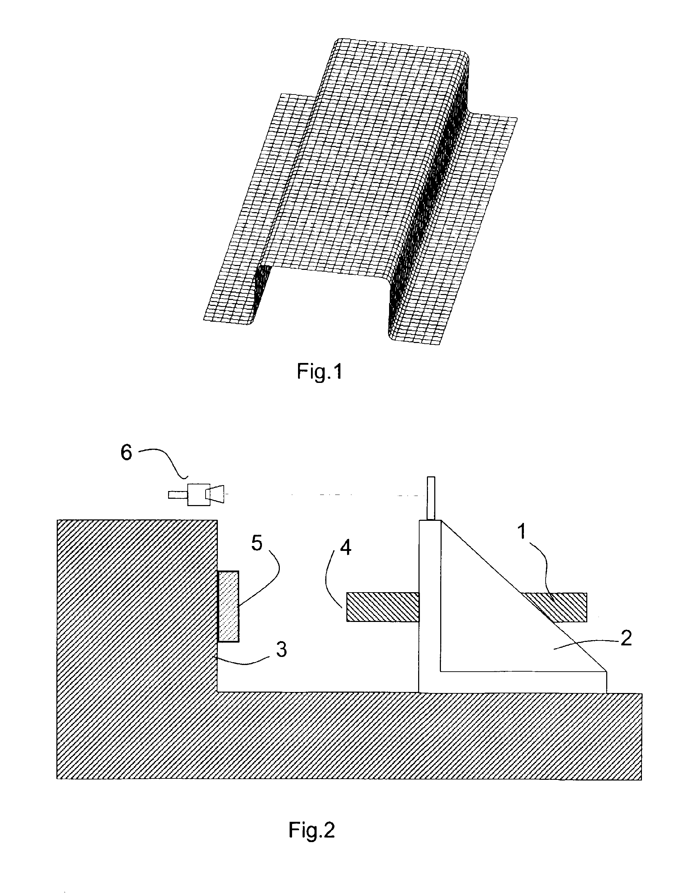

- la figure 3A correspond à la poutre décrite à l'exemple 1, réalisée par assemblage de deux profilés tels qu'illustrés à la figure 1 ; la figure 3B correspond à la même poutre après déformation en réponse à une force d'impact de choc dont la projection sur l'axe longidudinal de cette poutre représente la composante principale ;
- la figure 2 est un schéma du dispositif utilisé pour évaluer le comportement au choc des poutres d'absorption ;
- les figures 4A, 5A, 6A et 7 décrivent d'autres formes possibles de poutres creuses selon l'invention ;
- les figures 4B, 5B, 6B illustrent la forme des poutres des figures 4A, 5A, 6A après déformation en réponse à une force d'impact de choc à composante principale longidudinale.

### Exemple 1 :

Cet exemple a pour but d'illustrer un mode de réalisation d'une poutre d'absorption selon l'invention.

Pour fabriquer la tôle composite nécessaire à la fabrication de la poutre, on prend :
- une âme à base de polypropylène d'épaisseur approximativement uniforme de l'ordre de 1 mm,
- deux parements d'épaisseur 0,25 mm, en tôle d'acier galvanisé sur les deux faces, pré-peint sur la face correspondant à la face externe de la tôle composite, pré-encollé sur l'autre face.
... et on applique la face pré-encollée de chaque parement sur chaque face de l'âme.

Les caractéristiques mécaniques intrinsèque de l'acier des parements sont :
- contrainte à la rupture Rₘ = 300 MPa,
- limite d'élasticité Rₑ = 180 MPa,
- allongement à la rupture A% = 40%.

On emboutit ensuite la tôle composite d'épaisseur 1,5 mm de manière à obtenir deux profilés comprenant une base de largeur 80 mm, deux ailes de hauteur 40 mm environ, adjacentes et perpendiculaires à cette base formant avec cette base un U, prolongées par un rebord parallèle à la base s'étendant vers l'extérieur du U sur une largeur de 30 mm ; l'un des profilés obtenu est schématisé à la figure 1.

Les conditions d'emboutissage sont les suivantes : jeu nul - rayon de poinçon : 5 mm - rayon de matrice : 6 mm - pression de serre flan : 17 10⁺⁵ Pa pour un format de tôle 300 mm x 220 mm.

On assemble ensuite les deux emboutis en appliquant les rebords du deuxième embouti renversé (ouvert vers le bas) sur les rebords du premier embouti ouvert vers le haut et en solidarisant les deux emboutis par rivetage au niveau des rebords.

On obtient ainsi une poutre de section fermée approximativement carrée (80 mm x 80 mm), telle que schématisée à la figure 3A (où les rivets ne sont pas représentés).

De préférence, les rivets sont équidistants d'un intervalle correspondant à la longueur de flambement plastique de la poutre (2H), ce qui évite aux points de liaisons rivetés d'être soumis à des déformations trop importantes en cisaillement et en traction lors de la déformation de la poutre sous l'effet du choc, et ce qui permet à ces points de liaison d'être enroulés lors de la formation de lobes résultant de cette déformation.

En référence à la figure 2, la poutre obtenue est alors testée dans les conditions suivantes : la poutre 1 est fixée horizontalement sur un chariot 2 déplaçable à vitesse contrôlée vers un mur rigide 3, de manière à ce que, au moment du choc du chariot contre le mur, ce soit l'une des extrémités 4 de cette poutre 1 qui impacte directement un butoir 5 solidaire du mur 3 ; à l'aide de capteurs adaptés 6, on mesure l'effort instantané d'écrasement et l'écrasement (déformation longitudinale) de la poutre ; on pratique une amorce dans l'extrémité impactante 4 de la poutre, adaptée pour initier la formation de lobes du côté du mur de choc et pour ne pas perturber le mode de déformation de la poutre à l'endroit où elle est fixée sur le chariot 2 ; on calcule ensuite l'effort moyen d'écrasement Pₘ à partir de la moyenne des mesures d'effort instantané d'écrasement.

Avec un chariot d'une masse globale de 300 kg, poids de la poutre 1 comprise, lancée à une vitesse initiale de 36 km/h perpendiculairement au mur 3, l'énergie cinétique du chariot est donc de l'ordre de 15 kJ ; dans ces conditions de choc, l'effort moyen d'écrasement Pₘ obtenu est de l'ordre de 35 kN sur 150 mm d'écrasement, ce qui correspond à une capacité d'absorption d'énergie de 5080 J ; en pratiquant une série d'essais identiques, on évalue l'écart type de l'effort moyen d'écrasement à 1 kN environ.

A l'issue du choc, on constate que la poutre 1 s'est déformée par formation et écrasement de lobes successifs en accordéon, comme représenté à la figure 3B ; quelques ruptures apparaissent en fin d'écrasement de lobes, sans modifier la stabilité de la poutre durant l'impact.

En prenant en compte le poids de la poutre 1, on évalue alors l'énergie spécifique dissipée par kilogramme de matériau à 16 kJ/kg.

### Exemple comparatif 1 :

A partir d'une tôle d'acier d'épaisseur 0,8 mm galvanisée et prépeinte sur les deux faces, de même nuance que la tôle d'acier des parements de la tôle composite de l'exemple 1, on emboutit, on assemble et on teste une poutre dans les mêmes conditions que dans l'exemple 1.

Dans les mêmes conditions de test, l'effort moyen d'écrasement P°ₘ obtenu est de l'ordre de 25 kN sur 150 mm d'écrasement, ce qui correspond à une capacité d'absorption d'énergie de 3577 J ; en pratiquant une série d'essais identiques, on évalue l'écart type de l'effort moyen d'écrasement à 1 kN environ.

En prenant en compte le poids de la poutre, on évalue alors l'énergie spécifique dissipée par kilogramme de matériau à 9 kJ/kg.

Les résultats de l'exemple 1 montrent que l'invention permet de doubler l'énergie spécifique dissipée par kilogramme de matériau par rapport à une configuration classique de l'art antérieur de l'exemple comparatif 1.

## Revendications

1. Poutre creuse d'absorption d'énergie de choc ayant un axe le long duquel, pour absorber ledit choc, sa longueur est réduite d'une manière approximativement uniforme en réponse à une force d'impact de choc dont la projection sur cet axe représente la composante principale, ladite absorption d'énergie étant essentiellement irréversible et procédant essentiellement par déformation plastique des parois de ladite poutre,
caractérisée en ce qu'au moins une desdites parois est en tôle composite comprenant une âme d'épaisseur homogène en matériau polymère et, sur chaque face de ladite âme, un parement en tôle métallique collé sur ladite âme et dont l'épaisseur est inférieure à celle de ladite âme.

2. Poutre selon la revendication 1 caractérisée en ce que toutes lesdites parois sont en tôle composite.

3. Poutre selon l'une quelconque des revendications précédentes caractérisée en ce que lesdites tôles métalliques sont en acier.

4. Procédé de fabrication d'une poutre creuse d'absorption d'énergie de choc ayant un axe le long duquel, pour absorber ledit choc, sa longueur est réduite d'une manière approximativement uniforme en réponse à une force d'impact de choc dont la projection sur cet axe représente la composante principale, ladite absorption d'énergie étant essentiellement irréversible et procédant essentiellement par déformation plastique des parois de ladite poutre, caractérisé en ce qu'il comprend les étapes consistant à :
- fabriquer une tôle composite comprenant une âme d'épaisseur homogène en matériau polymère et, sur chaque face de ladite âme, un parement en tôle métallique collé sur ladite âme et dont l'épaisseur est inférieure à celle de ladite âme,
- puis, conférer à ladite tôle composite la forme d'au moins une paroi et, le cas échéant avec d'autres parois en tôle métallique, assembler lesdites parois pour former ladite poutre creuse.

5. Procédé selon la revendication 4 caractérisé en ce que ledit matériau polymère est thermoplastique.
